# EUROPÄISCHE PATENTSCHRIFT

(11) **EP 1 189 836 B1**
(45) Veröffentlichungstag und Bekanntmachung des Hinweises auf die Patenterteilung: **03.03.2004**
(21) Anmeldenummer: 00935165.1
(22) Anmeldetag: 03.06.2000
(51) Int. Cl.: C01B 15/037

(54) **VERFAHREN ZUR STABILISIERUNG VON WASSERSTOFFPEROXID**
METHOD FOR STABILIZING HYDROGEN PEROXIDE
PROCEDE POUR STABILISER DU PEROXYDE D'HYDROGENE

(30) Priorität: 29.06.1999 AT 112899
(43) Veröffentlichungstag der Anmeldung: 27.03.2002
(73) Patentinhaber: DSM Fine Chemicals Austria Nfg GmbH & Co KG, 4021 Linz (AT)
(72) Erfinder: ALSTERS, Paul, NL-6224 KZ Maastricht (NL)
(74) Vertreter: Lindinger, Ingrid
(86) Internationale Anmeldenummer: PCT/EP2000/005078
(87) Internationale Veröffentlichungsnummer: WO 2001/002293

(56) Entgegenhaltungen:
- EP-A- 0 384 911
- WO-A-95/00439
- DE-B- 1 262 982
- GB-A- 1 449 525
- US-A- 5 078 672

## Beschreibung

Wasserstoffperoxid wird schon seit längerer Zeit als Oxidationsmittel in organischen Synthesereaktionen, aber auch als Bleichmittel, beispielsweise zum Bleichen von Papier oder Textilien, eingesetzt. Der Nachteil von Wasserstoffperoxid ist die Neigung zur Zersetzung in Wasser und Sauerstoff, wobei insbesondere Spuren von Metallen bzw. Metallsalzen die Zersetzungsreaktion katalytisch beschleunigen. Dieses Problem tritt bei Oxidationsreaktionen, die einen Metallkatalysator, insbesondere einen Übergangsmetallkatalysator, oder ein Enzym mit Katalase-Aktivität verwenden, auf. Dies hat zur Folge, dass derartige enzym- oder metallkatalysierte Oxidationsreaktionen bisher einen großen Überschuß an Wasserstoffperoxid benötigen, wodurch wiederum negative Effekte bezüglich Prozessökonomie undAusbeute auftreten. Weiters wird die Möglichkeit für ein "Scale-up" solcher Reaktionen stark eingeschränkt, die ungewollte, starke exotherme Wasserstoffperoxidzersetzung mit der Bildung großer Mengen an Sauerstoff verbunden ist. Weiters bereitet die Zersetzung des Wasserstoffperoxids bei der Herstellung, Lagerung oder beim Transport von Wasserstoffperoxid bzw. von wässrigen Lösungen davon, oder bei anderen Anwendungsgebieten von Wasserstoffperoxid, wie etwa beim Bleichen von Papier und Textilien, ebenfalls Probleme.
Aus diesen Gründen wurden bereits die unterschiedlichsten Zusätze zur Stabilisierung von Wasserstoffperoxid und wässrigen Wasserstoffperoxidlösungen untersucht. Dies sind beispielsweise anorganische Salze, wie Phosphate, Pyrophosphate oder Stannate, organische Verbindungen, wie organische Chelatbildner oder organische Säuren. Beschrieben sind diese Zusätze unter anderem in "Hydrogen Peroxid", Schumb et al., publiziert von Reinhold Publishing Company, New York (1955), Seiten 447 bis 539.
Diese Zusätze eignen sich meistens nicht für enzym- oder metall katalysierte Oxidationsreaktionen unter Verwendung von Wasserstoffperoxid, da sie zur Vergiftung des eingesetzten Katalysators führen.

Aus D. de Vos, T. Bein, Chem. Comm. 1996, 917 oder D. de Vos, T. Bein, J. Organomettal. Chem. 1996, 520, 195 ist beispielsweise bekannt, dass Aceton als Lösungsmittel die Wasserstoffperoxidzersetzung während katalytischer Oxidationsreaktionen unterdrückt. Bei der Verwendung von Aceton besteht jedoch die Gefahr, dass sich hochexplosive Produkte, wie 3,3,6,6-Tetramethyltetroxan, das in Form von explosiven Kristallen während der Oxidation oder der Aufarbeitung ausfallen kann, bilden. Aus diesem Grund eignet sich die Kombination von Aceton oder einem anderen Keton als Lösungsmittel und Wasserstoffperoxid nicht für Prozesse im industriellen Maßstab.

Aufgabe der vorliegenden Erfindung war es demnach, neue Zusätze zu finden, die die Stabilisierung von Wasserstoffperoxid in erster Linie bei enzym- oder metallkatalysierten Reaktionen in hohem Maße gewährleistet und die für den industriellen Maßstab geeignet sind.

Unerwarteterweise konnte diese Aufgabe durch die Verwendung von α-Ketocarbonsäureestern oder von Aldehydcarbonsäureestern gelöst werden. Ebenfalls unerwartet war, dass solche α-Keto- oder Aldehydcarbonsäureester nur in kleinen Mengen zugesetzt werden müssen, während im Gegensatz dazu Aceton oder andere Ketone als Lösungsmittel verwendet werden müssen, um die H₂O₂- Zersetzung effektiv zu unterdrücken.

Gegenstand der Erfindung ist daher die Verwendung von einem oder mehreren α-Ketound/oder Aldehydcarbonsäureestern zur Stabilisierung von Wasserstoffperoxid bei enzym- oder metallkatalysierten Oxidationsreaktionen in der organischen Synthese.

Erfindungsgemäß wird Wasserstoffperoxid bei enzym- oder metallkatalysierten Oxidationsreaktionen durch den Zusatz einer ausreichenden Menge an α-Keto- und/oder Aldehydcarbonsäureestern stabilisiert und die Zersetzung von Wasserstoffperoxid in Wasser und Sauerstoff unterdrückt. Dies ist weiters beispielsweise bei der Herstellung, der Lagerung oder dem Transport von Wasserstoffperoxid oder von Wasserstoffperoxidlösungen, wo schon kleine Mengen an Metallverunreinigungen zur Zersetzung führen können, ebenfalls von Bedeutung.
Ein weiterer Gegenstand der Erfindung ist demnach die Verwendung von einem oder mehreren α-Keto- und/oder Aldehydcarbonsäureestern zur Stabilisierung von Wasserstoffperoxid oder von Wasserstoffperoxidlösungen bei der Herstellung, der Lagerung oder dem Transport.
Derartig stabilisiertes Wasserstoffperoxid bzw. Lösungen davon eignen sich nicht nur für enzym- oder metallkatalysierte Oxidationsreaktionen in der organischen Synthese, sie können beispielsweise auch zum Bleichen von Papier und Textilien, wie etwa Leinen, Baumwolle, Wolle, Seide oder Jute, eingesetzt werden.

Als α-Keto-oder Aldehydcarbonsäureester kommen alle α-Keto-oder Aldehydcarbonsäureester mit dem Strukturelement der Formel I 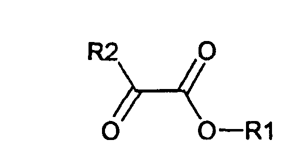 in Frage.

R₁ und R₂ bedeuten dabei bei α-Ketocarbonsäureestern einen gesättigten oder ungesättigten, verzweigten, unverzweigten oder cyclischen C₁-C₃₀-Alkylrest oder einen aromatischen oder heteroaromatischen Rest, wobei diese Reste unsubstituiert oder durch C₁-C₃₀-Alkoxy-, Amino-, Amid-, Cyano-, Carbonyl-, Halogen-, Hydroxy- oder Nitro-Gruppen substituiert sein können.
Im Falle der Aldehydcarbonsäureester bedeutet R₂ Wasserstoff. R₁ hat dieselbe Bedeutung wie oben definiert.

Bevorzugt bedeuten bei α-Ketocarbonsäureestern R₁ und R₂ einen C₁-C₅-Alkylrest wie Methyl-, Ethyl-, Propyl-, Isopropyl-, tert.-Butyl- oder einen Benzylrest. Besonders bevorzugt ist der Methylrest. Bei Aldehydcarbonsäureestern bedeutet R₁ ebenfalls bevorzugt einen C₁-C₅-Alkylrest wie Methyl-, Ethyl-, Propyl-, Isopropyl-, tert. Butyl- oder einen Benzylrest, sowie besonders bevorzugt einen Methylrest. R₂ bedeutet in diesem Fall Wasserstoff.
Als besonders bevorzugte Stabilisatoren werden somit erfindungsgemäß Methylglyoxylat oder Methylpyruvat eingesetzt.
Die α-Carbonylester können auch in Form eines entsprechenden Hemi- oder Vollacetales als Stabilisatoren verwendet werden.
Geeignete Glyoxylsäureesterhemiacetale sind beispielsweise in EP-P-0 099 981 beschrieben. Bevorzugt sind Glyoxylsäuremethylestermethylhemiacetal (GMHA), Glyoxylsäureethylesterhemiacetale, Glyoxylsäurepropylesterhemiacetale, Glyoxylsäure-ipropylesterhemiacetale, Glyoxylsäure-t-oder-n-butylester-hemiacetale.
Besonders bevorzugt wird GMHA als Hemiacetal eingesetzt.
Geeignete Glyoxylsäureestervollacetale sind Glyoxylsäureester-di-alkyl-acetale, wie etwa das Glyoxylsäureester-dimethylacetal.

Zur Stabilisation kann dabei nur ein α-Keto- oder Aldehydcarbonsäureester oder aber Mischungen mehrerer α-Ketocarbonsäureester, mehrerer Aldehydcarbonsäureester oder Mischungen aus α-Keto- und Aldehydcarbonsäureestern eingesetzt werden.
Der erfindungsgemäße Stabilisator bzw. ein Stabilisatorgemisch wird dabei in einer äquivalenten Menge, im Über- oder im Unterschuss zum Wasserstoffperoxid eingesetzt. Bevorzugt werden 0,05 bis 1,5 Mol, besonders bevorzugt 0,2 bis 1,2 Mol an Stabilisator bzw. Stabilisatorgemisch pro Mol Wasserstoffperoxid, zugesetzt. Im Unterschuss kann der Stabilisator beispielsweise dann eingesetzt werden, wenn Wasserstoffperoxid während der katalytischen Oxidationsreaktion langsam zugegeben wird. Ist dies nicht der Fall, so ist die Zugabe einer äquimolaren Menge an Stabilisator ganz besonders bevorzugt.

Die oben angeführten Stabilisatoren eignen sich zur Stabilisierung von Wasserstoffperoxid bei enzym- oder metall katalysierten Oxidationsreaktionen. Bei Oxidationsreaktionen enthalten die Reaktionslösungen zumindest das zu oxidierende Substrat, ein für die jeweilige Oxidationsreaktion geeignetes organisches Lösungsmittel oder Lösungsmittelgemisch und einen Metallkatalysator, vorzugsweise einen Übergangsmetallkatalysator, oder einen Enzym-Katalysator.
Gegebenenfalls kann die Reaktionslösung eine Pufferlösung enthalten.
Die erfindungsgemäßen Stabilisatoren finden demnach Anwendung bei katalysierten Oxidationsreaktionen, unabhängig von der Art des eingesetzten Katalysators und des verwendeten Lösungsmittels.
Als Katalysatoren können demnach beispielsweise alle üblichen Oxidationskatalysatoren, wie etwa RuO₂, [Mn₂O₃{Me₃tacn}₂](PF₆)₂, (Me₃tacn = 1,4,7-trimethyl-1,4,7-triazacyclononan), V₂O₅, Mangan(II)Acetat, Chrom(III)nitrat u.s.w. oder Enzyme, wie etwa Vanadiumhaloperoxidase u.s.w. anwesend sein.
Lösungsmittel können beispielsweise Alkohole, wie Methanol, Ethanol, t-Butanol, u.s.w, Ethylacetat, Essigsäure, Aceton, Acetonitril, Methylenchlorid, Chlorbenzol u.s.w. und Wasser sein.

Dies ist insbesondere bei solchen Oxidationsreaktionen von großer Bedeutung, bei welchen bis jetzt ein großer Überschuß an Wasserstoffperoxid eingesetzt werden musste, der sich negativ auf die Wirtschaftlichkeit und Sicherheit des Verfahrens, das Reaktionsvolumen und auf die Möglichkeit des "scale up", aufgrund der ungewollten, starken exothermen Wasserstoffperoxidzersetzung in Kombination mit der Bildung großer Mengen an Sauerstoff, auswirkt.
Bevorzugt werden die erfindungsgemäßen Stabilisatoren bei Epoxidierungen, Alkoholoxidationen, Oxidationen von C-H-Bindungen, oxidative Halogenierungen u.s.w. eingesetzt.

Weiters können die erfindungsgemäßen Stabilisatoren auch zur Stabilisierung von Wasserstoffperoxid bei dessen Herstellung, Lagerung oder beim Transport oder bei deren Anwendung als Bleichmittel für Papier und Textilien verwendet werden.
Wasserstoffperoxid kann dabei auch in Form einer wässrigen oder einer organischen Lösung vorliegen.

### Beispiel 1:

Eine 50%ige wässrige Lösung von H₂O₂ (304mg; 4.46 mmol) wurde zu 454 mg (4.46 mmol) Methylpyruvat bzw. zu 535 mg (4.46 mmol) Glyoxylsäuremethylestermethylhemiacetal zugegeben. Im Falle von Methylpyruvat wurde während der Zugabe eine deutliche Wärmeentwicklung festgestellt. Nach einer Stunde wurde das H₂O₂/α-Ketoester-Gemisch mit 1ml Lösungsmittel vermischt und einer Suspension von 2.5mg RuO₂.xH₂O-Katalysator (Aldrich) in 4 ml Lösungsmittel, zugesetzt. Die Suspension wurde in einem 50 ml Kolben vorgelegt, der in einem Wasserbad auf Raumtemperatur gehalten wurde.

Als Vergleich wurde einer Suspension von 2.5mg RuO₂.xH₂O-Katalysator (Aldrich) in 4 ml Lösungsmittel mit einer 50%igen wässrigen Lösung von H₂O₂ (304mg; 4.46 mmol) und 1ml Lösungsmittel ohne Stabilisator vermengt.

Die Menge an Sauerstoff, die sich bei der Zersetzung des Wasserstoffperoxids entwikkelte wurde als Funktion der Zeit mittels eines Brooks-meter, das die Messung des Gasflusses und der Gesamtmenge an entwickeltem Gas ermöglichte, bestimmt.

Die verwendeten Stabilisatoren, Lösungsmittel (LM) und die Ergebnisse sind aus den Tabellen 1-3 ersichtlich.
Die Sauerstoffmenge ist dabei definiert als % von der maximal aufgrund der Stöchiometrie zu berechnenden Menge.

**Tabelle 1:**

| Vergleichsversuch ohne Stabilisator | | | | | | | |
|---|---|---|---|---|---|---|---|
| t/min | O2-Entwicklung/in Abhängigkeit vom verwendeten LM V(O2)/(Vmax(O2)*100% | | | | | | |
| | Ethylacetat | Essigsäure | t-Butanol | Methanol | Aceton | Acetonitril | Wasser |
| 1 | 27 | 0 | 11 | 10 | 28 | 28 | 27 |
| 2 | 48 | 12 | 25 | 20 | 47 | 51 | 46 |
| 3 | 52 | 28 | 38 | 27 | 49 | 60 | 49 |
| 4 | 54 | 38 | 47 | 31 | 50 | 62 | 49 |
| 5 | 54 | 47 | 70 | 35 | 51 | 63 | 49 |
| 10 | 54 | 70 | 70 | 51 | 51 | 63 | 49 |
| 15 | 54 | 79 | 70 | 62 | 51 | 63 | 49 |
| 20 | 54 | 82 | 70 | 69 | 51 | 63 | 49 |
| 25 | 54 | 82 | 70 | 72 | 51 | 63 | 49 |
| 30 | 54 | 82 | 70 | 73 | 51 | 63 | 49 |
| 35 | 54 | 82 | 70 | 73 | 51 | 63 | 49 |
| 40 | 54 | 82 | 70 | 73 | 51 | 63 | 49 |

**Tabelle 2:**

| mit Methylpyruvat als Stabilisator | | | | | | | |
|---|---|---|---|---|---|---|---|
| | O2-Entwicklung/in Abhängigkeit vom verwendeten LM V(O2)/(Vmax(O2)*100% | | | | | | |
| t/min | Ethylacetat | Essigsäure | t-Butanol | Methanol | Aceton | Acetonitril | Wasser |
| 1 | 8 | 0 | 2 | 10 | 10 | 9 | 9 |
| 2 | 12 | 0 | 5 | 19 | 20 | 18 | 17 |
| 5 | 20 | 2 | 10 | 32 | 29 | 30 | 30 |
| 10 | 29 | 4 | 18 | 43 | 29 | 40 | 40 |
| 15 | 32 | 4 | 21 | 49 | 29 | 47 | 48 |
| 20 | 37 | 4 | 23 | 52 | 29 | 51 | 51 |
| 25 | 40 | 4 | 25 | 53 | 29 | 53 | 55 |
| 30 | 42 | 4 | 25 | 53 | 29 | 53 | 55 |
| 35 | 47 | 4 | 25 | 53 | 29 | 53 | 55 |
| 40 | 50 | 4 | 25 | 53 | 29 | 53 | 55 |

**Tabelle 3:**

| mit Glyoxylsäuremethylestermethylhemiacetal (GMHA) als Stabilisator | | | | | | | |
|---|---|---|---|---|---|---|---|
| t/min | O2-Entwicklung/in Abhängigkeit vom verwendeten LM V(O2)/(Vmax(O2)*100% | | | | | | |
| | Ethylacetat | Essigsäure | t-Butanol | Methanol | Aceton | Acetonitril | Wasser |
| 1 | 3 | 0 | 0 | 0 | 0 | 3 | 3 |
| 2 | 5 | 1 | 0 | 0 | 0 | 3 | 4 |
| 3 | 6 | 2 | 0 | 0 | 0 | 3 | 5 |
| 4 | 7 | 2 | 0 | 0 | 0 | 3 | 6 |
| 5 | 8 | 2 | 0 | 0 | 0 | 3 | 10 |
| 10 | 9 | 2 | 0 | 0 | 0 | 3 | 13 |
| 15 | 9 | 2 | 0 | 0 | 0 | 3 | 13 |
| 20 | 9 | 2 | 0 | 0 | 0 | 3 | 13 |
| 25 | 9 | 2 | 0 | 0 | 0 | 3 | 13 |
| 30 | 9 | 2 | 0 | 0 | 0 | 3 | 13 |
| 35 | 9 | 2 | 0 | 0 | 0 | 3 | 13 |
| 40 | 9 | 2 | 0 | 0 | 0 | 3 | 13 |

### Beispiel 2:

Eine 50%ige wässrige Lösung von H₂O₂ (304mg; 4.46 mmol) wurde zu 454 mg (4.46 mmol) Methylpyruvat bzw. zu 535 mg (4.46 mmol) Glyoxylsäuremethylestermethylhemiacetal zugegeben. Im Falle von Methylpyruvat wurde während der Zugabe eine deutliche Wärmeentwicklung festgestellt. Nach einer Stunde wurde das H₂O₂/α-Ketoester-Gemisch mit 1ml Lösungsmittel vermischt und einer Suspension von 1.0 mg [Mn₂O₃{Me₃tacn}₂](PF₆)₂-Katalysator in 4 ml Lösungsmittel, zugesetzt. Die Suspension wurde in einem 50 ml Kolben vorgelegt, der in einem Wasserbad auf Raumtemperatur gehalten wurde. Durch diese Zugabe löste sich, in den Fällen, in denen noch ungelöster Katalysator vorlag, der Katalysator vollständig auf.

Als Vergleich wurde einer Suspension von 1.0 mg [Mn₂O₃{Me₃tacn}₂](PF₆)₂-Katalysator in 4 ml Lösungsmittel mit einer 50%igen wässrigen Lösung von H₂O₂ (304mg; 4.46 mmol) und 1 ml Lösungsmittel ohne Stabilisator vermengt.

Die Menge an Sauerstoff, die sich bei der Zersetzung des Wasserstoffperoxids entwikkelte wurde als Funktion der Zeit mittels eines Brooks-meter, das die Messung des Gasflusses und der Gesamtmenge an entwickeltem Gas ermöglichte, bestimmt.

Die verwendeten Stabilisatoren, Lösungsmittel (LM) und die Ergebnisse sind aus den Tabellen 4-6 ersichtlich.

**Tabelle 4:**

| Vergleichsversuch ohne Stabilisator | | | | | | |
|---|---|---|---|---|---|---|
| O2-Entwicklung/in Abhängigkeit vom verwendeten LM V(O2)/(Vmax(O2)*100% | | | | | | |
| t/min | Ethylacetat | Essigsäure | t-Butanol | Methanol | Aceton | Acetonitril |
| 1 | 2 | 0 | 0 | 1 | 1 | 28 |
| 2 | 9 | 2 | 0 | 1 | 2 | 51 |
| 3 | 19 | 6 | 0 | 1 | 3 | 60 |
| 4 | 29 | 9 | 0 | 1 | 4 | 62 |
| 5 | 37 | 12 | 0 | 3 | 5 | 63 |
| 10 | 48 | 33 | 0 | 18 | 12 | 63 |
| 15 | 48 | 49 | 31 | 30 | 28 | 63 |
| 20 | 48 | 55 | 65 | 39 | 40 | 63 |
| 25 | 48 | 59 | 71 | 45 | 50 | 63 |
| 30 | 48 | 59 | 72 | 50 | 57 | 63 |
| 35 | 48 | 59 | 72 | 53 | 60 | 63 |
| 40 | 48 | 59 | 72 | 58 | 65 | 63 |
| 50 | 48 | 59 | 72 | 58 | 65 | 63 |
| 60 | 48 | 59 | 72 | 58 | 65 | 63 |
| 70 | 48 | 59 | 72 | 58 | 65 | 63 |
| 80 | 48 | 59 | 72 | 58 | 65 | 63 |

**Tabelle 5:**

| mit Methylpyruvat als Stabilisator | | | | | | |
|---|---|---|---|---|---|---|
| O2-Entwicklung/in Abhängigkeit vom verwendeten LM V(O2)/(Vmax(O2)*100% | | | | | | |
| t/min | Ethylacetat | Essigsäure | t-Butanol | Methanol | Aceton | Acetonitril |
| 1 | 0 | 0 | 0 | 1 | 0 | 0 |
| 4 | 0 | 3 | 0 | 2 | 0 | 0 |
| 5 | 0 | 8 | 0 | 2 | 0 | 0 |
| 10 | 6 | 20 | 0 | 2 | 0 | 3 |
| 15 | 9 | 24 | 0 | 2 | 0 | 9 |
| 20 | 9 | 24 | 0 | 2 | 0 | 18 |
| 25 | 9 | 24 | 0 | 2 | 0 | 25 |
| 30 | 9 | 24 | 0 | 2 | 0 | 30 |
| 35 | 9 | 24 | 0 | 2 | 0 | 35 |
| 50 | 9 | 24 | 0 | 2 | 6 | 38 |
| 60 | 9 | 24 | 0 | 2 | 12 | 38 |
| 70 | 9 | 24 | 0 | 2 | 20 | 38 |
| 80 | 9 | 24 | 0 | 2 | 28 | 38 |

**Tabelle 6:**

| mit Glyoxylsäuremethylestermethylhemiacetal (GMHA) als Stabilisator | | | | | | |
|---|---|---|---|---|---|---|
| O2-Entwicklung/in Abhängigkeit vom verwendeten LM V(O2)/(Vmax(O2)*100% | | | | | | |
| t/min | Ethylacetat | Essigsäure | t-Butanol | Methanol | Aceton | Acetonitril |
| 5 | 0 | 0 | 0 | 1 | 0 | 0 |
| 10 | 4 | 2 | 0 | 1 | 0 | 0 |
| 15 | 8 | 3 | 0 | 1 | 0 | 0 |
| 20 | 9 | 3 | 0 | 1 | 0 | 0 |
| 25 | 9 | 3 | 0 | 1 | 0 | 0 |
| 30 | 9 | 3 | 0 | 1 | 0 | 0 |
| 35 | 9 | 3 | 0 | 1 | 0 | 0 |
| 40 | 9 | 3 | 0 | 1 | 0 | 0 |
| 50 | 9 | 3 | 0 | 1 | 0 | 0 |
| 60 | 9 | 3 | 0 | 1 | 9 | 0 |
| 70 | 9 | 3 | 0 | 1 | 12 | 0 |
| 80 | 9 | 3 | 0 | 1 | 12 | 0 |

### Beispiel 3: [Mn₂O₃{Me₃tacn}₂](PF₆)₂-katalysierte Epoxidierung von Cyclohexen mit H₂O₂

### Variante a): Epoxidierung ohne α-Ketoester und ohne Oxalat-Puffer (Vergleich)

27.7 mg (0.035 mmol) [Mn₂O₃{Me₃tacn}₂](PF₆)₂, 2.95 g (35.9 mmol) Cyclohexen und 5.14 g (35.0 mmol) 1,3-Dichlorbenzol wurden in 40 ml Acetonitril gelöst. Die so erhaltene Lösung wurde in einem Eiswasserbad gekühlt und anschließend wurden der Lösung 3.0 ml (52.5 mmol) einer 50%igen wässrigen Lösung von H₂O₂ innerhalb von 3 Stunden zugesetzt. 15 Minuten nach Beendigung der H₂O₂-Zugabe wurde das Reaktionsgemisch mittels GC analysiert.
Das Ergebnis ist aus Tabelle 7 ersichtlich.

### Variante b): Epoxidierung ohne α-Ketoester in Gegenwart eines Oxalat-Puffer (Vergleich)

Der Oxalatpuffer wurde durch Lösen von 13.5 g (0.15 mol) Oxalsäure und 6.15 g (0.15 mol) NaOH in 1000 ml Wasser erhalten.
27.7 mg (0.035 mmol) [Mn₂O₃{Me₃tacn}₂](PF₆)₂, 2.95 g (35.9 mmol) Cyclohexen und 5.14 g (35.0 mmol) 1,3-Dichlorbenzol wurden in 40 ml Acetonitril gelöst. Zu dieser Lösung wurden 1.4 ml Oxalatpuffer (6 Moläquivalent Oxalat bezogen auf den Katalysator)zugegeben. Die so erhaltene Lösung wurde in einem Eiswasserbad gekühlt und anschließend wurden der Lösung 3.0 ml (52.5 mmol) einer 50%igen wässrigen Lösung von H₂O₂ innerhalb von 3 Stunden zugesetzt. 15 Minuten nach Beendigung der H₂O₂-Zugabe wurde das Reaktionsgemisch mittels GC analysiert.
Das Ergebnis ist aus Tabelle 7 ersichtlich.

### Variante c): Epoxidierung in Gegenwart eines α-Ketoester ohne Oxalat-Puffer

27.7 mg (0.035 mmol) [Mn₂O₃{Me₃tacn}₂](PF₆)₂, 2.95 g (35.9 mmol) Cyclohexen, 1.79 g (17.5 mmol) Methylpyruvat (MP) bzw. 2.10 g (17.5 mmol) GMHA und 5.14 g (35.0 mmol) 1,3-Dichlorbenzol wurden in 40 ml Acetonitril gelöst. Die so erhaltene Lösung wurde in einem Eiswasserbad gekühlt und anschließend wurden der Lösung 3.0 ml (52.5 mmol) einer 50%igen wässrigen Lösung von H₂O₂ innerhalb von 3 Stunden zugesetzt. 15 Minuten nach Beendigung der H₂O₂-Zugabe wurde das Reaktionsgemisch mittels GC analysiert.
Das Ergebnis ist aus Tabelle 7 ersichtlich.

### Variante d): Epoxidierung in Gegenwart eines α-Ketoester und eines Oxalat-Puffer

27.7 mg (0.035 mmol) [Mn₂O₃{Me₃tacn}₂](PF₆)₂, 2.95 g (35.9 mmol) Cyclohexen, 1.79 g (17.5 mmol) Methylpyruvat (MP) bzw. 2.10 g (17.5 mmol) GMHA und 5.14 g (35.0 mmol) 1,3-Dichlorbenzol wurden in 40 ml Acetonitril gelöst. Zu dieser Lösung wurden 1.4 ml Oxalatpuffer (6 Moläquivalent Oxalat bezogen auf den Katalysator) zugegeben. Die so erhaltene Lösung wurde in einem Eiswasserbad gekühlt und anschließend wurden der Lösung 3.0 ml (52.5 mmol) einer 50%igen wässrigen Lösung von H₂O₂ innerhalb von 3 Stunden zugesetzt. 15 Minuten nach Beendigung der H₂O₂-Zugabe wurde das Reaktionsgemisch mittels GC analysiert.
Das Ergebnis ist aus Tabelle 7 ersichtlich.

Bei den Varianten a) - d) war 1,3-Dichlorbenzol während der Reaktion als interner Standard anwesend. Die Reaktionsgemische wurden jeweils mit GC (Hewlett Packard 5890 series II; CpSil5CB-column (25m x 0.32 mm, dl = 1.2 µm) analysiert. Temperaturprogram: Start temp.: 70°C, init. time: 1 min., rate: 7°C/min, final temp.: 250°C).

**Tabelle 7:**

| Variante: | a | b | c | c | d | d |
|---|---|---|---|---|---|---|
| | | | mit MP | mit GMHA | mit MP | mit GMHA |
| Konversion | 0% | 64% | 31% | 94% | 100% | 100% |
| Ausbeute | 0% | 39% | 14% | 60% | 68% | 76% |
| Selektivität | 0% | 61% | 45% | 64% | 68% | 76% |

### Beispiel 4:

27.7 mg (0.035 mmol) [Mn₂O₃{Me₃tacn}₂](PF₆)₂, 2.95 g (35.9 mmol) Cyclohexen, 1.05 g (8.75 mmol) GMHA und 5.14 g (35.0 mmol) 1,3-Dichlorbenzol wurden in 40 ml Acetonitril gelöst. Zu dieser Lösung wurden 1.4 ml Oxalatpuffer (6 Moläquivalent Oxalat bezogen auf den Katalysator) zugegeben. Die so erhaltene Lösung wurde in einem Eiswasserbad gekühlt und anschließend wurden der Lösung 3.0 ml (52.5 mmol) einer 50%igen wässrigen Lösung von H₂O₂ innerhalb von 6 Stunden zugesetzt. 15 Minuten nach Beendigung der H₂O₂-Zugabe wurde das Reaktionsgemisch mittels GC analysiert.
Konversion: 100%; Ausbeute: 81%; Selektivität: 81%

### Beispiel 5:

27.7 mg (0.035 mmol) [Mn₂O₃{Me₃tacn}₂](PF₆)₂, 3.74 g (35.9 mmol) Styrol, 1.05 g (8.75 mmol) GMHA und 5.14 g (35.0 mmol) 1,3-Dichlorbenzol wurden in 40 ml Acetonitril gelöst. Zu dieser Lösung wurden 1.4 ml Oxalatpuffer (6 Moläquivalent Oxalat bezogen auf den Katalysator) zugegeben. Die so erhaltente Lösung wurde in einem Eiswasserbad gekühlt und anschließend wurden der Lösung 3.0 ml (52.5 mmol) einer 50%igen wässrigen Lösung von H₂O₂ innerhalb von 6 Stunden zugesetzt. 15 Minuten nach Beendigung der H₂O₂-Zugabe wurde das Reaktionsgemisch mittels GC analysiert.
Konversion: 88%; Ausbeute: 69%; Selektivität: 78%

Bei den Beispielen 4 und 5 war 1,3-Dichlorbenzol während der Reaktion als interner Standard anwesend. Die Reaktionsgemische der Beispiele 4-6 wurden jeweils mit GC (Hewlett Packard 5890 series II; CpSil5CB-column (25m x 0.32 mm, dl = 1.2 µm) analysiert. Temperaturprogram: Start temp.: 70°C, init. time: 1 min., rate: 7°C/min, final temp.: 250°C).

### Beispiel 6:

18.4 mg (0.023 mmol) [Mn₂O₃{Me₃tacn}₂](PF₆)₂, 2.52 g (23.3 mmol) Benzylalkohol und 2.10 g (17.5 mmol) GMHA wurden in 40 ml t-Butanol gelöst. Die so erhaltene Lösung wurde in einem Eiswasserbad auf Raumtemperatur gekühlt und anschließend wurden der Lösung 4.0 ml (70.3 mmol) einer 50%igen wässrigen Lösung von H₂O₂ innerhalb von 4 Stunden zugesetzt. Eine GC-Analyse 15 Minuten nach Beendigung der H₂O₂-Zugabe zeigte eine quantitative Umwandlung des Benzylalkohols.
Das Reaktionsgemisch wurde mit 100 ml Diethylether verdünnt und die organische Phase 4x mit je 25 ml Wasser extrahiert. Danach wurden 50 ml einer wässrigen 0.5M NaOH-Lösung zugegeben. Nach Entfernen der organischen Phase, wurde die wässrige Phase 2x mit je 25 ml Diethylether extrahiert. 100 ml Diethylether wurden sodann zugesetzt, gefolgt von 50 ml einer wässrigen 0.5M HCl-Lösung. Die organische Phase wurde abgetrennt und über Natriumsulfat getrocknet. Nach Abtrennen des Lösungsmittels im Vakuum wurde reine Benzoesäure als hellgelber Feststoff isoliert.
Ausbeute: 2.47 g (87%)

## Patentansprüche

1. Verwendung von einem oder mehreren α-Keto- und/oder Aldehydcarbonsäureestern zur Stabilisierung von Wasserstoffperoxid bei enzym- oder metallkatalysierten Oxidationsreaktionen in der organischen Synthese.

2. Verwendung von einem oder mehreren α-Keto- und/oder Aldehydcarbonsäureestern zur Stabilisierung von Wasserstoffperoxid oder von wässrigen oder organischen Wasserstoffperoxidlösungen bei der Herstellung, der Lagerung oder dem Transport.

3. Verwendung nach Anspruch 1 oder 2, **dadurch gekennzeichnet, dass** als α-Keto-oder Aldehydcarbonsäureester Verbindungen der Formel I 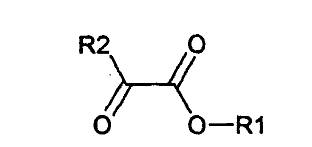 eingesetzt werden, in der R₁ und R₂ bei α-Ketocarbonsäureestern einen gesättigten oder ungesättigten, verzweigten, unverzweigten oder cyclischen C₁-C₃₀-Alkylrest oder einen aromatischen oder heteroaromatischen Rest bedeuten, wobei diese Reste unsubstituiert oder durch C₁-C₃₀-Alkoxy-, Amino-, Amid-, Cyano-, Carbonyl-, Halogen-, Hydroxy- oder Nitro-Gruppen substituiert sein können, und im Falle der Aldehydcarbonsäureester R₂ Wasserstoff bedeutet und R₁ dieselbe Bedeutung wie für α-Ketocarbonsäureestern hat.

4. Verwendung nach Anspruch 1 oder 2, **dadurch gekennzeichnet, dass** als α-Keto-oder Aldehydcarbonsäureester C₁-C₅Alkyl- oder Benzylglyoxylat oder C₁-C₅Alkyl-oder Benzylpyruvat oder deren Hemi- oder Vollacetale eingesetzt werden.

5. Verfahren zur Stabilisierung von Wasserstoffperoxid bei enzym- oder metallkatalysierten Oxidationsreaktionen in der organischen Synthese, **dadurch gekennzeichnet, dass** Reaktionslösungen von Oxidationsreaktionen, enthaltend das zu oxidierende Substrat, einen Enzym- oder Metallkatalysator und ein organisches Lösungsmittel oder Lösungsmittelgemisch, mit α-Keto- und/oder Aldehydcarbonsäureestern versetzt werden.

6. Verfahren nach Anspruch 5, **dadurch gekennzeichnet, dass** pro mol Wasserstoffperoxid 0,05 bis 1,5 mol an Stabilisator zugesetzt werden.

7. Stabilisiertes Wasserstoffperoxid oder stabilisierte, wässrige oder organische Wasserstoffperoxidlösungen, **dadurch gekennzeichnet, dass** sie einen oder mehreren α-Keto- und/oder Aldehydcarbonsäureestern in einer Menge von 0,05 bis 1,5 mol pro mol Wasserstoffperoxid als Stabilisator enthalten.

8. Verwendung von Wasserstoffperoxid oder Wasserstoffperoxidlösungen gemäß Anspruch 7 zum Bleichen von Papier und Textilien.

## Claims

1. The use of one or more α-keto- and/or aldehydecarboxylic esters for stabilizing hydrogen peroxide in enzyme- or metal-catalyzed oxidation reactions in organic synthesis.

2. The use of one or more α-keto- and/or aldehydecarboxylic esters for stabilizing hydrogen peroxide or aqueous or organic hydrogen peroxide solutions during preparation, storage or transportation.

3. The use as claimed in claim 1 or 2, **characterized in that** the α-keto- or aldehydecarboxylic esters used are compounds of the formula I 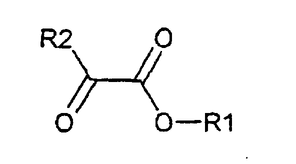 in which R₁ and R₂ in the case of α-ketocarboxylic esters are a saturated or unsaturated, branched, unbranched or cyclic C₁-C₃₀-alkyl radical or an aromatic or heteroaromatic radical, where these radicals may be unsubstituted or substituted by C₁-C₃₀-alkoxy, amino, amide, cyano, carbonyl, halogen, hydroxyl or nitrile groups, and in the case of the aldehydecarboxylic esters, R₂ is hydrogen and R₁ has the same meaning as for α-ketocarboxylic esters.

4. The use as claimed in claim 1 or 2, **characterized in that** the α-keto- or aldehydecarboxylic esters used are C₁-C₅-alkyl or benzyl glyoxylate or C₁-C₅-alkyl or benzyl pyruvate or hemiacetals or full acetals thereof.

5. A process for stabilizing hydrogen peroxide in enzyme- or metal-catalyzed oxidation reactions in organic synthesis, **characterized in that** α-keto- and/or aldehydecarboxylic esters are added to reaction solutions of oxidation reactions, comprising the substrate to be oxidized, an enzyme or metal catalyst and an organic solvent or solvent mixture.

6. The process as claimed in claim 5, **characterized in that** 0.05 to 1.5 mol of stabilizer are added per mole of hydrogen peroxide.

7. Stabilized hydrogen peroxide or stabilized, aqueous or organic hydrogen peroxide solutions, **characterized in that** they comprise one or more α-keto- and/or aldehydecarboxylic esters in an amount of from 0.05 to 1.5 mol per mole of hydrogen peroxide as stabilizer.

8. The use of hydrogen peroxide or hydrogen peroxide solutions as in claim 7 for the bleaching of paper and textiles.

## Revendications

1. Utilisation d'un ou plusieurs esters des acides carboxyliques aldéhydiques et/ou α-cétoesters des acides carboxyliques pour la stabilisation du peroxyde d'hydrogène lors des réactions d'oxydation dans la synthèse organique catalysée par métaux ou enzymes.

2. Utilisation d'un ou plusieurs esters des acides carboxyliques aldéhydiques et/ou α-cétoesters des acides carboxyliques pour la stabilisation du peroxyde d'hydrogène ou des solutions de peroxyde d'hydrogène aqueuses ou organiques lors de la fabrication, du stockage ou du transport.

3. Utilisation selon la revendication 1 ou 2, **caractérisée en ce qu'**on utilise en tant que composés de α-cétoester des acides carboxylique ou d'ester des acides carboxyliques aldéhydiques de formule 1 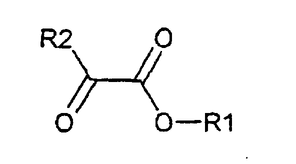 dans laquelle R₁ et R₂ représentent pour des α-cétoesters des acides carboxyliques un radical alkyle saturé ou non saturé, ramifié, normal ou cyclique ou un radical aromatique ou hétéroaromatique, moyennant quoi ces radicaux peuvent être non substitués ou substitués par des groupes C₁-C₃₀-alkoxy, amino, amide, cyano, carbonyle, nitro ou hydroxy d'halogène et en cas d'ester carboxylique aldéhydique R₂ représente l'hydrogène et R₁ a la même importance que pour les α-cétoesters des acides carboxyliques.

4. Utilisation selon la revendication 1 ou 2, **caractérisée en ce qu'**on utilise en tant que α-cétoesters des acides carboxyliques ou esters des acides carboxyliques aldéhydiques, un C₁-C₅-alkyle ou un glyoxylate de benzyle ou un pyruvate de benzyle ou de C₁-C₅-alkyle ou leurs acétals ou hémiacétals.

5. Procédé de stabilisation du peroxyde d'hydrogène pour des réactions d'oxydation catalysées par métaux ou enzymes dans la synthèse organique, **caractérisé en ce qu'**on utilise des milieux réactionnels de réactions d'oxydation, contenant le substrat à oxyder, un catalyseur métallique ou enzymatique et un solvant ou un mélange de solvant organique, avec des esters des acides carboxyliques aldéhydiques et/ou des α-cétoesters des acides carboxyliques.

6. Procédé selon la revendication 5, **caractérisé en ce qu'**on ajoute 0,05 à 1,5 mol de peroxyde d'hydrogène par mol au stabilisateur.

7. Peroxyde d'hydrogène stabilisé ou solutions de peroxyde d'hydrogène stabilisées, aqueuses ou organiques, **caractérisé en ce qu'**ils contiennent un ou plusieurs esters des acides carboxyliques aldéhydiques et/ou des α-cétoesters des acides carboxyliques dans une quantité allant de 0,05 à 1,5 mol par mol de peroxyde d'hydrogène en tant que stabilisateur.

8. Utilisation du peroxyde d'hydrogène ou des solutions de peroxyde d'hydrogène selon la revendication 7 pour blanchir du papier et des textiles.
